# EUROPÄISCHE PATENTSCHRIFT

(11) **EP 2 429 361 B1**
(45) Veröffentlichungstag und Bekanntmachung des Hinweises auf die Patenterteilung: **12.03.2014**
(21) Anmeldenummer: 10718931.8
(22) Anmeldetag: 26.04.2010
(51) Int. Cl.: A47J 43/07, A47B 88/04

(54) **KÜCHENGERÄT MIT WERKZEUGSCHUBLADE**
KITCHEN APPLIANCE HAVING TOOL DRAWER
APPAREIL DE CUISINE DOTÉ D'UN TIROIR À USTENSILES

(30) Priorität: 14.05.2009 DE 102009003116
(43) Veröffentlichungstag der Anmeldung: 21.03.2012
(73) Patentinhaber: BSH Bosch und Siemens Hausgeräte GmbH, 81739 München (DE)
(72) Erfinder: PESEC, Jurij, 3301 Petrovce (SI); KOVACIC, Peter, 3303 Gomilsko (SI); RUDEZ, Darko, 3230 Sentjur (SI)
(86) Internationale Anmeldenummer: PCT/EP2010/055506
(87) Internationale Veröffentlichungsnummer: WO 2010/130554

(56) Entgegenhaltungen:
- EP-A1- 0 850 733
- EP-A2- 1 504 696

## Beschreibung

### Hintergrund der Erfindung

Die vorliegende Erfindung betrifft ein Küchengerät mit einer Werkzeugschublade, wobei das Küchengerät mindestens ein Verschlussmittel zum Verschließen der Werkzeugschublade aufweist.

### Stand der Technik

Üblicherweise werden Schubladen bei Küchengeräten mit einem elastischen Element gesichert. In der Einbaulage wird die Schublade mit Hilfe des elastischen Elements in Position gehalten, so dass diese nicht ohne Anwendung einer bestimmten Kraft geöffnet werden kann. Auch sollte beispielsweise im Falle eines Transports des Küchengeräts sichergestellt werden, dass die Schublade nicht versehentlich aufgeht. Die Schubladen beinhalten üblicherweise scharfe Werkzeuge wie Zerkleinerungsmesser, Reib-Raspeleinsätze etc. Diese sollten bei einem unkontrollierten Aufgehen der Schublade nicht zu einer Verletzung eines Benutzers führen.

Auch bekannt ist, dass Zubehörteile des Küchengeräts in einem Gehäuse untergebracht werden können, welches von einem Deckel verschlossen ist. Der Deckel wird mit Hilfe von Scharnieren an das Gehäuse angebracht, so dass ein Benutzer Zugang zu den Zubehörteilen haben kann. Solch eine Vorrichtung wird in der US 4 733 827 offenbart. Die DE 600 08 405 T2 zeigt einen Halter zum Aufbewahren von Zubehörteilen eines Haushaltsgeräts. Der Halter ist ebenfalls als Schublade in einem Boden des Geräts ausgebildet.

Ein weiteres Küchengerät mit Werkzeugschublade ist in der EP 0 850 733 A1 beschrieben.

Die bekannten Lösungen bringen jedoch unterschiedliche Nachteile mit sich. So kann sich beispielsweise das elastische Element schnell abnutzen und somit wird eine sichere Einbaulage der Schublade nicht mehr gewährleistet. Der Einsatz von Scharnieren hat sich als kostenintensiv herausgestellt und die Produktion erfordert eine Vielzahl an zusätzlichen Produktionsschritten.

### Der Erfindung zugrundeliegende Aufgabe

Der Erfindung liegt die Aufgabe zugrunde, ein Küchengerät mit einer Werkzeugschublade bereitzustellen, welche sicher in ihrer geschlossenen Position gehalten wird, einfach bedienbar ist und ferner kostengünstig in der Herstellung ist.

### Erfindungsgemäße Lösung

Die Lösung der gestellten Aufgabe gelingt durch ein Küchengerät mit den Merkmalen des Anspruchs 1. Vorteilhafte Aus- und Weiterbildungen, welche einzeln oder in Kombination miteinander eingesetzt werden können, sind Gegenstand der abhängigen Ansprüche.

Das erfindungsgemäße Küchengerät weist eine Werkzeugschublade auf. Das Küchengerät umfasst mindestens ein Mittel zum Verschließen der Werkzeugschublade. Das Mittel zum Verschließen ist erfindungsgemäß in einem Boden der Werkzeugschublade angeordnet und steht mit einem Gegenmittel an ein Gehäuse des Küchengeräts in verschlossenem Zustand in Eingriff. Verschlossener bzw. geschlossener Zustand bedeutet, dass die Werkzeugschublade sich in ihrer Einbaulage befindet und innerhalb des Gehäuses des Küchengeräts aufgenommen worden ist.

Durch die Verwendung des Mittels zum Verschließen der Werkzeugschublade kann eine sichere Verbindung zwischen Schublade und Gehäuse gewährleistet werden, so dass kein versehentliches Aufgehen der Werkzeugschublade beim Transportieren oder während des Betriebes der Küchenmaschine erfolgen kann. Die scharfen Zubehörteile, wie Raspel- oder Hackmesser oder ähnliches, werden somit sicher verwart.

Das Mittel zum Verschließen der Werkzeugschublade kann somit direkt in der Werkzeugschublade ausgebildet werden, so dass keine zusätzlichen elastischen Elemente benötigt werden, welche schnell verschleißen können. Die Werkzeugschublade allgemein kann platzsparend im unteren Teil eines Küchengeräts gleitend gelagert werden, so dass alle Werkzeuge innerhalb des Gehäuses untergebracht werden können. Im Betrieb kann ein Benutzer leicht alle Zubehörteile erreichen und durch das Mittel zum Verschließen kann gewährleistet werden, dass die Schublade nicht versehentlich aufgeht, welches zu Verletzungen durch scharfe Zubehörteile führen kann.

Zusätzlich kann durch das Mittel zum Verschließen eine angenehme Haptik während des Bedienvorganges erreicht werden. Dadurch dass das Mittel von einem Benutzer zum Aufmachen der Schublade betätigt werden muss, kann eine angenehmes Bedienen der Schublade und somit des Küchengeräts bereitgestellt werden, da der Benutzer immer eine Rückmeldung seiner Aktionen erhält.

### Bevorzugte Ausgestaltung der Erfindung

Es wird bevorzugt, dass das Verschlussmittel in einem Boden der Werkzeugschublade integral ausgebildet ist. Durch diese Ausführung kann das verschlussmittel mittels eines Prozessschrittes im Boden der Schublade integriert werden, so dass kostengünstig hergestellt werden kann. Das Herstellungsverfahren kann beispielsweise Spritzgießen sein, welches nur mit Hilfe eines Werkzeugs fürs Schublade und Verschlussmittel durchgeführt werden kann. Somit kann auch die Elastizität des Plastischen Materials des Bodens der Schublade für die Funktionalität des Verschlussmittels verwendet werden.

Vorteilhaft ist das Verschlussmittel derart eingerichtet, um von einem Benutzer betätigt zu werden. Dadurch kann bewirkt werden, dass die Schublade nur absichtlich geöffnet werden kann und nicht versehentlich beispielsweise beim Transport des Küchengeräts aufgehen könnte.

Es ist bevorzugt dass das Verschlussmittel als Einrastmittel ausgebildet ist. Die Einrastmittel können eine sichere und gleichzeitig eine elastische Verbindung zwischen Verschlussmittel im Boden der Schublade und mit dem Gehäuseteil des Küchengeräts gewährleisten. Zusätzlich erhält der Benutzer eine Rückmeldung in dem Moment wo die Schublade ihre Einbaulage erreicht hat, dass das Einrasten des Einrastmittels in dem Gegenmittel am Gehäuseteil von einem Einrastgeräusch begleitet wird. Die Art und Lautstärke des Geräusches können Beispielsweise durch die Elastizität des Einrastmittels gesteuert werde. So kann beispielsweise die Dicke des Materials variiert werden. Bevorzugt ist das Verschlussmittel einstückig in dem Boden der Werkzeugschublade ausgebildet ist. Dadurch kann eine kompakte und formstabile Werkzeugschublade hergestellt werden.

In einer bevorzugten Ausführungsform weist das Verschlussmittel ferner eine Feder zum Erhöhen der Schließkraft auf. Die Feder kann beispielsweise auf das Verschlussmittel angebracht werden, und die Elastizität des Materials kann somit variiert werden. Folglich kann die Materialstärke des gesamten Werkzeugschublade im Wesentlichen konstant gehalten werden und nur im Bereich des Verschlussmittels kann eine Variierung der Federwirkung angepasst werden.

Bevorzugt ist die Feder als Flachfeder ausgebildet und auf dem Verschlussmittel angeordnet. Durch die Verwendung einer Flachfeder kann ein platzsparendes Verschlussmittel mit verbesserter Elastizität erreicht werden.

Gemäß einer Ausführungsform ist das Gegenmittel an dem Gehäuseteil als Gegeneinrastmittel ausgebildet. Das Gegenrastmittel kann somit das Einrastmittel sicher aufnehmen und in der Einbaulage der Schublade fixieren.

Vorteilhafter Weise weist das Küchengerät eine Öffnung in dem Gehäuseteil auf, welche im geschlossenen Zustand der Werkzeugschublade mit dem Verschlussmittel derart übereinstimmt, dass das Verschlussmittel durch einen Benutzer betätigbar ist. Die Öffnung wird vorteilhaft in der Mitte des Gehäuseteils ausgebildet und ermöglicht den direkten Zugang zur Betätigungsfläche des Verschlussmittels. Die Öffnung kann derart realisiert werden, dass diese nur durch einen Finger einer Hand passiert werden kann jedoch auch größere bzw. breiter Öffnungen sind vorstellbar. Die Öffnung ist in ihrer Abmessung und Lage am Gehäuseteil dergestalt ausgebildet, dass das Verschlussmittel mit der Öffnung im geschlossenen Zustand der Schublade übereinstimmt.

Erfindungsgemäß ist das Gegenmittel mit dem Gehäuseteil des Küchengeräts einstückig ausgebildet. Auch somit können Prozessschritte während des Herstellungsverfahrens gespart werden. Weiter weist die einstückige Ausbildung des Gegenmittels am Gehäuseteil eine hohe Steifigkeit, welche die Lebensdauer des Küchengeräts erhöht. Vorzugsweise weisen das Verschlussmittel und das Gegenmittel eine hackenförmige Ausgestaltung im Bereich des Zusammenwirkens auf, welche als Hacken und Gegenhacken ausgebildet sind. Somit kann die sichere Verrastung der Schublade innerhalb des Küchengeräts in ihrer Einbaulage gewährleistet werden.

Gemäß einer vorteilhaften Ausführungsform ist das Verschlussmittel als elastischer Rasthacken, insbesondere aus Kunststoff gefertigt, ausgebildet. Somit kann die Schublade flexibel in ihrer Einbaulage fixiert werden und dem Klappern, welches beispielsweise während des Transports des Küchengeräts entstehen kann, entgegengewirkt werden.

Besonders bevorzugt ist die Werkzeugschublade derart eingerichtet, um vollständig aus dem Gehäuse des Küchengeräts entfernt werden zu können. Dies erleichtert die Reinigung der Werkzeugschublade.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
Fig. 1 ein Küchengerät mit eine Werkzeugschublade in geöffneter Stellung ohne Abdeckung gemäß der vorliegenden Erfindung;
Fig. 2 das Küchengerät gemäß der vorliegenden Erfindung mit aufgesetzter Abdeckung in einer schematischen Ansicht
Fig. 3 eine weitere Ansicht des Küchengeräts; und schließlich
Fig. 4 einen Schnitt durch die Achse A-A' gemäß Fig. 1.

### Ausführliche Beschreibung anhand eines Ausführungsbeispiels

Bei der nachfolgenden Beschreibung der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

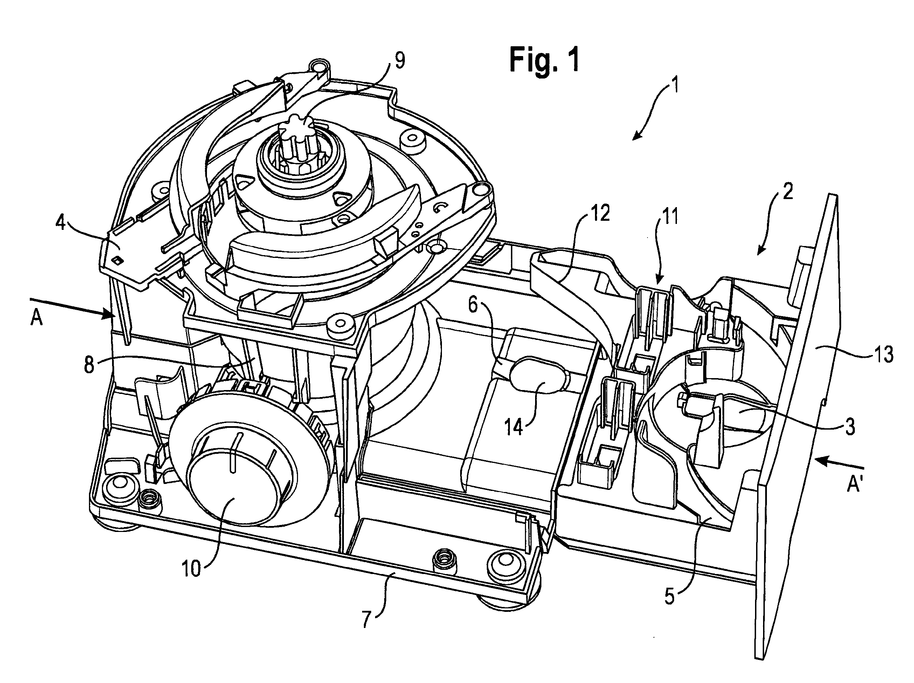

Fig. 1 zeigt ein Küchengerät 1 mit einer Werkzeugschublade 2 aus Gründen der Übersichtlichkeit ohne Abdeckgehäuse bzw. Abdeckung. Zum ordnungsgemäßen Betrieb des Küchengeräts 1 muss eine Abdeckung vorgesehen werden, welche alle Funktionsteile, wie Elektromotor und Antreibseinrichtungen abdeckt. Das Küchengerät wird mit Hilfe des Bedienknopfes 10 gesteuert, welcher beispielsweise als Drehknopf realisierbar ist. Mit Hilfe des Bedienknopfes kann ein Benutzer die gewünschte Geschwindigkeit der rotierenden Werkzeuge einstellen und auch das Ein- bzw. Ausschalten des Küchengeräts 1 bewirken. Im zusammengebauten Zustand kann die Antriebseinrichtung 9 mit Hilfe einer Kupplung mit einem Werkzeug des Küchengeräts 1 in Verbindung gebracht werden, so dass beispielsweise Lebensmittel in einer Schüssel der Küchengeräts 1 bearbeitet werden können. Weiter umfasst das Küchengerät 1 eine Sicherheitseinrichtung 4 auf, welche erkennt ob das Küchengerät ordnungsgemäß in Betrieb genommen werden kann, d.h. ob alle Aufsätze richtig zusammengeführt worden sind.

Die Funktionsteile des Küchengeräts 1 werden oberhalb des Gehäuseteils 7 des Küchengeräts 1 angeordnet und werden anschließend mit Hilfe einer Abdeckung abgedeckt, um Verschmutzung oder Verletzungen eines Benutzers zu vermeiden. Gemäß einer Ausführungsform sind das Gehäuseteil 7 und die Abdeckung als separate Bauteile hergestellt, jedoch auch eine Integralausführung beider Bauteile in einem Prozessschritt ist realisierbar. Das Gehäuseteil 7, Abdeckung und die Schublade 2 können aus einem plastischen Material mit Hilfe eines Spritzgussverfahrens realisiert werden, welches sich als kostengünstig und robust herausgestellt hat. Die Werkzeugschublade 2 muss derart hergestellt werden, dass diese einerseits alle Werkzeuge zum Betreiben der Küchengeräts 1 aufnehmen kann und andererseits den begrenzten Platz oberhalb des Gehäuseteils 7 des Küchengeräts 1 ausnutzen kann.

Die Werkzeugschublade weist unterschiedliche Aussparungen 11 zum Aufnehmen von Werkzeugen des Küchengeräts. Innerhalb der Schublade 2 können unterschiedliche Werkzeuge angeordnet werden, wie beispielsweise eine Antriebswelle, Schneidemesser, welche rotierend in einer Schüssel im Betrieb anbringbar sind oder andere Werkzeuge zur Verarbeitung von Lebensmitteln durch das Küchengerät 1. Die Werkzeuge können vertikal oder horizontal in der Ebene des Bodens 5 der Werkzeugschublade 2 angebracht werden.

Gemäß dieser Ausführungsform weist die Werkzeugschublade 2 im Bereich des Elektromotors 8 einen bogenförmigen Bereich 12, welcher in der Einbaulage der Werkzeugschublade 2 den Elektromotor 8 umschließt. Durch diese Maßnahme kann effektiv der gesamte Innenraum des Küchengeräts 1 ausgenutzt werden.

Das Küchengerät dieser beispielhaften Ausführungsform ist würfelförmig realisiert, jedoch auch andere Formen sind realisierbar, wobei die Werkzeugschublade 2 an die neuen Gegebenheiten des Innenraums des Küchengeräts angepasst werden muss. Auch vorstellbar ist, dass die Werkzeugschublade 2 standardisierte Dimensionen aufweist, so dass sie in unterschiedlichen Küchengeräten 1 oder Küchenmaschinen Einsatz finden kann.

Die Werkzeugschublade 2 weist eine Blende 13 auf, welche entweder einstückig mit dem Boden 5 Werkzeugschublade 2 hergestellt werden kann, oder nachträglich aufgesteckt werden. Weitere Funktionsteile des Küchengeräts 1 werden aus Gründen der Übersichtlichkeit nicht näher erläutert.

Gemäß einer Ausführungsform der vorliegenden weist die Werkzeugschublade 2 des Küchengeräts 1 ein Verschlussmittel 3 zum Verschließen der Schublade 2 auf, welches im Boden 5 einstückig angeordnet ist. Das Verschlussmittel 3 kann mittels eines Spritzgussverfahrens zusammen mit dem Boden 5 der Schublade 2 hergestellt werden. Durch die Wahl eines plastischen Materials kann die nötige Elastizität des Verschlussmittels 3 gesichert werden. Ferner ist es denkbar, dass das Verschlussmittel 3 ferner zusätzliche Federmittel (nicht dargestellt) erhält, um die Elastizität und die Lebensdauer beispielsweise zu erhöhen.

Das Verschlussmittel 3 wird vorteilhaft in der Mitte des Bodens 5 der Werkzeugschublade, so dass es problemlos von einem Benutzer betätigt werden kann. Das Verschlussmittel 3 wird in der Ebene des Bodens 5 integriert, so dass der optische Eindruck ebenfalls vorteilhaft ist. Das Verschlussmittel 3 gemäß dieser Ausführungsform wird als Einrastmittel ausgebildet und steht, in der Einbaulage der Werkzeugschublade 2, mit einem Gegenmittel 6 im Eingriff. Das Verschlussmittel 3 und das Gegenmittel 6 können beispielsweise als Schnappverschlussvorrichtung 19a, 19b implementiert werden, so dass diese sich nicht versehentlich lösen können. Falls ein Benutzer das Verschlussmittel 3 betätigen möchte, muss dieser mit dem Finger einen Druck auf das Verschlussmittel 3 ausüben, welches dazuführt, dass das Einrasten zwischen Gegenmittel 6 und Verschlussmittel 3 gelöst werden kann. Durch die Elastizität des plastischen Materials der Schublade 2, in welcher das Verschlussmittel 3 integral hergestellt worden ist, kann das Verschlussmittel 3 nach oben gedrückt werden und kehrt in seiner Ausgangslage wieder zurück. Das Gegenmittel 6 ist gemäß dieser Ausführungsform der vorliegenden Erfindung im Gehäuseteil 7 des Küchengeräts ausgebildet und bildet einen Einrastbereich für das Verschlussmittel 3.

Das Gehäuseteil 7 weist eine Öffnung 14 auf, welche es einem Benutzer erlaubt, das Verschlussmittel 3 auf der Werkzeugschublade zu betätigen. Falls die Werkzeugschublade 2 in ihrer Einbaulage innerhalb des Küchengeräts eingeschoben worden ist, stimmt die Öffnung mit der Betätigungsfläche 15 des Verschlussmittels 3 überein, so dass der Benutzer diese Betätigungsfläche 15 erreichen kann.

Falls ein Benutzer die Schublade 2 wieder in die Einbaulage schieben möchte ist keine Betätigung des Verschlussmittels 3 notwendig. Durch die vorteilhafte Ausführung schnappt das Verschlussmittel 3 in das Gegenmittel 6 ein, welches die Schublade 2 in ihre sichere Einbaulage fixiert. Zusätzlich erhält der Benutzer eine hörbare Rückmeldung des Vorgangs, welche durch das Einrasten des Verschlussmittels 3 auf das Gegenmittel 6 erzeugt wird und erkennt, dass die Werkzeugschublade 3 in ihrer Einbaulage sicher fixiert worden ist.

Ferner ist es vorstellbar, dass das Verschlussmittel 3 am Gehäuseteil 7 des Küchengeräts 1 angeordnet ist, und analog das Gegenmittel 6 in dem Boden 5 der Werkzeugschublade.

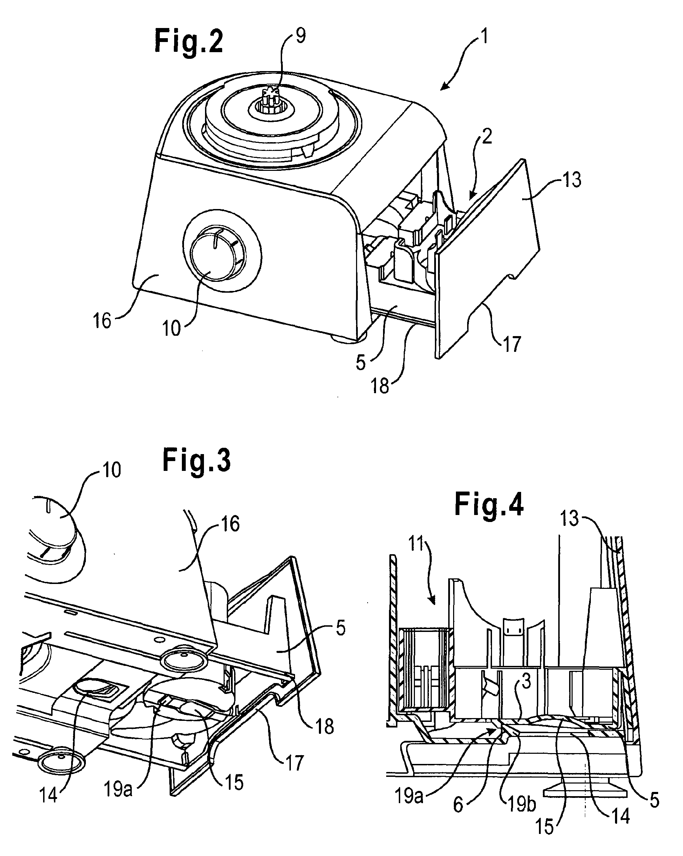

Fig. 2 zeigt das Küchengerät 1 mit der Werkzeugschublade 2, welche sich teilweise in ihrer Einbaulage befindet. Damit ein Benutzer bequem die Betätigungsfläche 15 des Verschlussmittels 3 an der Werkzeugschublade 2 erreichen kann, wurde die Blende 13 mit einem Durchgriff 17 versehen, welcher als halboffene Aussparung beispielhaft ausgeführt ist. Es ist vorstellbar andere Formen zu wählen, welche es ermöglichen, dass ein Benutzer die Betätigungsfläche 15 problemlos erreichen kann. Die Fig. 2 zeigt die Würfelform des Küchengerätes mit einer aufgesetzten Abdeckung 16 auf, welche alle Funktionsteile wie Steuerelektronik oder Elektromotor abdeckt, und vor unsachgemäßen Zugriff schützt. Der Boden 5 der Werkzeugschublade 2, weist Gleitflächen 18 auf, welche sich jeweils seitlich befinden und das sichere Ein- bzw. Ausfahren der Werkzeugschublade 2 ermöglichen. Die Gleitflächen 18 sind beispielsweise symmetrisch angeordnet und wirken mit geeigneten Mitteln am Gehäuseteil 7 zusammen.

Fig. 3 zeigt das Küchengerät 2 aus einer weiteren Ansicht, welche den Boden 5 der Werkzeugschublade 2 genauer abbildet. Das Verschlussmittel 3 ist in der Mitte des Bodens 5 der Werkzeugschublade 2 angeordnet, so dass ein Benutzer die Betätigungsfläche 15 leicht erreichen kann. Wie in der Fig. 2 beschrieben, weist die Blende 13 einen Durchgriff 17 auf, der trapezförmig ausgebildet ist, so dass die Hand bzw. die Finger der Hand eines Benutzers zur Betätigungsfläche 15 durchgriffen können.

Die Betätigungsfläche 15 stimmt mit der Öffnung 14 im Gehäuseteil 7 überein, falls die Werkzeugschublade 2 in das Küchengerät eingeschoben ist, d.h. sich in ihrer Einbaulage befindet. Wenn die Schublade 2 in ihre Endlage gebracht wird, passiert der hakenförmige Bereich des Verschlussteils 3 die Öffnung 14 und kann in der Einbaulage in dem Gegenmittel 3 am Gehäuseteil 7 einrasten, so dass eine sichere Verbindung zwischen Verschlussmittel 3 und Gegenmittel 6 sichergestellt ist. Nun kann ein Benutzer das Küchengerät transportieren, ohne dass beispielsweise schwerkraftbedingt die Schublade 2 versehentlich die Einbaulage verlässt.

Gemäß dieser beispielhaften Ausführungsform ist die Betätigungsfläche 15 des Verschlussmittels 3 so eingerichtet, dass ein einzelner Finger eines Benutzers notwendig ist, um diese zu betätigen. Vorstellbar ist die Fläche 15 so zu vergrößern, dass beispielsweise mehrere Finger einer Hand zur Betätigung notwendig sind, welche die Haptik verbessern könnte.

Fig. 4 zeigt einen Schnitt durch das Küchengerät 1 aus der Fig. 1 entlang der Achse A-A'. Die Schublade 2 befindet sich in ihrer Einbaulage, d.h. im verschlossenen Zustand, so dass die Betätigungsfläche 15 des Verschlussmittels 3 mit der Öffnung 14 im Gehäuseteil 7 des Küchengeräts 1 übereinstimmt. Die Werkzeugschublade 2 wird komplett im Inneren des Küchengeräts 1 aufgenommen, so dass alle Werkzeuge, welche in den Aussparungen 11 angeordnet werden können, durch die Abdeckung 10 abgedeckt sind.

Gemäß dieser Ansicht kann das Einrasten des Verschlussmittels 3 mit dem hakenförmigen Bereich in das Gegenmittel 6 am Gehäuseteil 7 erkannt werden. Um die Schublade 2 wieder aus der Einbaulage in eine geöffneten Position zu bringen muss ein Benutzer die Betätigungsfläche 15 so betätigen, dass das Verschlussmittel 3 das Gegenmittel 6 freigibt. Gemäß dieser Ausführungsform muss die Betätigung aufwärts durchgeführt werde. Durch die Elastizität des plastischen Materials des Bodens 5 der Werkzeugschublade 2, in welchem das Verschlussmittel 3 ausgebildet ist, kann auf zusätzliche Federmitteln verzichtet werde. Jedoch falls beispielsweise die Steifigkeit des Verschlussmittels 3 erhöht werden sollte, ist es vorstellbar, dass eine Flachfeder oberhalb der Betätigungsfläche 15 oder auf der Betätigungsfläche 15 angeordnet werden kann. Durch die Flachfeder kann ein verbessertes Zusammenwirken zwischen Verschlussmittel 3 und Gegenmittel 6 gesichert werden, so dass die Schublade sicher in ihrer Einbaulage fixiert ist. Die Flachfeder kann beispielsweise auch dazu verwendet werden, um den Druck auf die Betätigungsfläche 15 anzupassen.

Gemäß dieser Ausführungsform hat das Verschlussmittel 3 eine bogenförmige Ausgestaltung, welche zusätzlich durch die Elastizität des Materials die Schublade 2 in ihrer Einbaulage unter elastischer Spannung hält, welche einer noch besseren Fixierung entspricht. Durch die oben genannte elastische Vorspannung kann beispielsweise einem Klappern der Schublade 2 im Falle eines Transports des Küchengeräts 1 entgegengewirkt werden. Dieser Effekt kann beispielsweise durch die Verwendung zusätzlicher Feder, wie oben beschrieben, verbessert werden.

In dieser Ausführungsform der Werkzeugschublade ist die Materialstärke des plastischen Materials im Wesentlichen konstant gehalten worden. Es ist jedoch denkbar, dass das Verschlussmittel 3 eine unterschiedliche Materialstärke aufweist, um beispielsweise die Elastizität zu verändern. So könnte auf weitere Federn verzichtet werden, welches ebenfalls kostensparend ist.

### Bezugszeichenliste

- 1: Küchengerät
- 2: Werkzeugschublade
- 3: Verschlussmittel
- 4: Sicherheitseinrichtung
- 5: Boden der Werkzeugschublade
- 6: Gegenmittel
- 7: Gehäuseteil des Küchengeräts
- 8: Elektromotor
- 9: Antriebseinrichtung
- 10: Bedienknopf
- 11: Aussparungen zum Aufnehmen von Werkzeugen
- 12: bogenförmiger Bereich der Werkzeugschublade
- 13: Blende
- 14: Öffnung
- 15: Betätigungsfläche des Verschlussmittels
- 16: Abdeckung
- 17: Durchgriff
- 18: Gleitflächen bzw. Gleitbereiche
- 19: Hacken/Gegenhacken

## Patentansprüche

1. Küchengerät (1) mit einer Werkzeugschublade (2), wobei das Küchengerät mindestens ein Verschlussmittel (3) zum Verschließen der Werkzeugschublade (2) aufweist, **dadurch gekennzeichnet, dass** das Verschlussmittel (3) in einem Boden (5) der Werkzeugschublade (2) angeordnet ist und im verschlossenen Zustand der Werkzeugschublade (2) mit einem Gegenmittel (6) an ein Gehäuseteil (7) des Küchengeräts (1) in Eingriff steht.

2. Küchengerät (1) nach Anspruch 1, **dadurch gekennzeichnet, dass** das Verschlussmittel (xx) in einem Boden der Werkzeugschublade integral ausgebildet ist.

3. Küchengerät (1) nach Anspruch 1, **dadurch gekennzeichnet, dass** das Verschlussmittel (3) eingerichtet ist, um von einem Benutzer betätigt zu werden.

4. Küchengerät (1) nach Anspruch 1 oder 2, **dadurch gekennzeichnet, dass** das Verschlussmittel (3) als Einrastmittel ausgebildet ist.

5. Küchengerät (1) nach einem der vorhergehenden Ansprüche, **dadurch gekennzeichnet, dass** das Verschlussmittel (3) einstückig in dem Boden (xx) der Werkzeugschublade (2) ausgebildet ist.

6. Küchengerät (1) nach einem der vorhergehenden Ansprüche, **dadurch gekennzeichnet, dass** das Verschlussmittel (3) ferner eine Feder zum Erhöhen der Schließkraft aufweist.

7. Küchengerät (1) nach Anspruch 6, **dadurch gekennzeichnet, dass** die Feder als Flachfeder ausgebildet ist, welche auf dem Verschlussmittel (3) angeordnet ist.

8. Küchengerät (1) nach einem der vorhergehenden Ansprüche, **dadurch gekennzeichnet, dass** das Gegenmittel (6) an dem Gehäuseteil (7) als Gegeneinrastmittel (6) ausgebildet ist.

9. Küchengerät (1) nach einem der vorhergehenden Ansprüche, **dadurch gekennzeichnet, dass** eine Öffnung (14) in dem Gehäuseteil (7) des Küchengeräts (1) in einer Abmessung und Lage dergestalt ausgebildet ist, dass im geschlossenen Zustand der Werkzeugschublade (2) mit dem Verschlussmittel (3) derart übereinstimmt, dass das Verschlussmittel (3) durch einen Benutzer betätigbar ist.

10. Küchengerät (1) nach einem der vorhergehenden Ansprüche, **dadurch gekennzeichnet, dass** das Gegenmittel (6) mit dem Gehäuseteil (7) des Küchengeräts (1) einstückig ausgebildet ist.

11. Küchengerät (1) nach einem der vorhergehenden Ansprüche, **dadurch gekennzeichnet, dass** das Verschlussmittel (3) und das Gegenmittel (6) eine hackenförmige Ausgestaltung aufweisen, welche als Hacken und Gegenhacken (19a; 19b) ausgebildet sind.

12. Küchengerät (1) nach einem der vorhergehenden Ansprüche, **dadurch gekennzeichnet, dass** das Gegenmittel (6) einstückig in einem Gehäuseboden (7) des Küchengeräts ausgebildet ist.

13. Küchengerät (1) nach einem der vorhergehenden Ansprüche, **dadurch gekennzeichnet, dass** das Verschlussmittel (3) als elastischer Rasthacken, insbesondere aus Kunststoff gefertigt, ausgebildet ist.

14. Küchengerät (1) nach einem der vorhergehenden Ansprüche, **dadurch gekennzeichnet, dass** die Werkzeugschublade (2) derart eingerichtet ist, dass diese vollständig aus dem Gehäuseteil (7) des Küchengeräts entfernbar ist.

15. Küchengerät (1) nach einem der vorhergehenden Ansprüche, **dadurch gekennzeichnet, dass** das Gehäuseteil (7) ein Küchengeräteboden ist.

## Claims

1. Kitchen appliance (1) having a tool drawer (2), with the kitchen appliance comprising at least one locking means (3) for locking the tool drawer (2), **characterised in that** the locking means (3) is arranged in a base (5) of the tool drawer (2) and in a locked state of the tool drawer (2) engages with a counter means (6) on a housing part (7) of the kitchen appliance (1)

2. Kitchen appliance (1) according to claim 1, **characterised in that** the locking means (xx) is embodied integrally in a base of the tool drawer.

3. Kitchen appliance (1) according to claim 1, **characterised in that** the locking means (3) is configured to be actuated by a user.

4. Kitchen appliance (1) according to claim 1 or 2, **characterised in that** the locking means (3) is embodied as a latching means.

5. Kitchen appliance (1) according to one of the preceding claims, **characterised in that** the locking means (3) is embodied in one piece in the base (xx) of the tool drawer (2).

6. Kitchen appliance (1) according to one of the preceding claims, **characterised in that** the locking means (3) also comprises a spring for increasing the closing force.

7. Kitchen appliance (1) according to claim 6, **characterised in that** the spring is embodied as a flat spring, which is arranged on the locking means (3).

8. Kitchen appliance (1) according to one of the preceding claims, **characterised in that** the counter means (6) is embodied on the housing part (7) as a counter latching means (6).

9. Kitchen appliance (1) according to one of the preceding claims, **characterised in that**, in terms of dimension and position, an opening (14) is embodied in the housing part (7) of the kitchen appliance (1) such that in the locked state the tool drawer (2) corresponds with the locking means (3) such that the locking means (3) can be actuated by a user.

10. Kitchen appliance (1) according to one of the preceding claims, **characterised in that** the counter means (6) is embodied in one piece with the housing part (7) of the kitchen appliance (1).

11. Kitchen appliance (1) according to one of the preceding claims, **characterised in that** the locking means (3) and the counter means (6) comprise a hook-shaped configuration, which are embodied as hooks and counter hooks (19a; 19b).

12. Kitchen appliance (1) according to one of the preceding claims, **characterised in that** the counter means (6) is embodied in one piece in a housing base (7) of the kitchen appliance.

13. Kitchen appliance (1) according to one of the preceding claims, **characterised in that** the locking means (3) is embodied as elastic latching hooks, in particular made of plastic.

14. Kitchen appliance (1) according to one of the preceding claims, **characterised in that** the tool drawer (2) is configured such that this can be completely removed from the housing part (7) of the kitchen appliance.

15. Kitchen appliance (1) according to one of the preceding claims, **characterised in that** the housing part (7) is a kitchen appliance base.

## Revendications

1. Appareil de cuisine (1) doté d'un tiroir à ustensiles (2), l'appareil de cuisine présentant au moins un moyen de fermeture (3) pour fermer le tiroir à ustensiles (2), **caractérisé en ce que** le moyen de fermeture (3) est disposé dans un fond (5) du tiroir à ustensiles (2) et est en prise avec un moyen antagoniste (6) prévu sur un élément de boîtier (7) de l'appareil de cuisine (1), lorsque le tiroir à ustensiles (2) est à l'état fermé.

2. Appareil de cuisine (1) selon la revendication 1, **caractérisé en ce que** le moyen de fermeture (xx) est formé intégralement dans un fond du tiroir à ustensiles.

3. Appareil de cuisine (1) selon la revendication 1, **caractérisé en ce que** le moyen de fermeture (3) est conçu pour être actionné par un utilisateur.

4. Appareil de cuisine (1) selon la revendication 1 ou 2, **caractérisé en ce que** le moyen de fermeture (3) se présente sous forme de moyen d'encliquetage.

5. Appareil de cuisine (1) selon l'une des revendications précédentes, **caractérisé en ce que** le moyen de fermeture (3) est formé d'une seule pièce dans le fond (xx) du tiroir à ustensiles (2).

6. Appareil de cuisine (1) selon l'une des revendications précédentes, **caractérisé en ce que** le moyen de fermeture (3) présente en outre un ressort pour augmenter la force de fermeture.

7. Appareil de cuisine (1) selon la revendication 6, **caractérisé en ce que** le ressort se présente sous forme de ressort plat, disposé sur le moyen de fermeture (3).

8. Appareil de cuisine (1) selon l'une des revendications précédentes, **caractérisé en ce que** le moyen antagoniste (6) prévu sur l'élément de boîtier (7) se présente sous forme de moyen d'encliquetage antagoniste (6).

9. Appareil de cuisine (1) selon l'une des revendications précédentes, **caractérisé en ce qu'**une ouverture (14) est ménagée dans l'élément de boîtier (7), dans une dimension et position telles que lorsque le tiroir à ustensiles (2) est à l'état fermé, elle s'accorde avec le moyen de fermeture (3) de sorte que le moyen de fermeture (3) puisse être actionné par un utilisateur.

10. Appareil de cuisine (1) selon l'une des revendications précédentes, **caractérisé en ce que** le moyen antagoniste (6) est formé d'une seule pièce avec l'élément de boîtier (7) de l'appareil de cuisine (1).

11. Appareil de cuisine (1) selon l'une des revendications précédentes, **caractérisé en ce que** le moyen de fermeture (3) et le moyen antagoniste (6) ont une configuration en forme de crochet, se présentant sous forme de crochet et contre-crochet (19a ; 19b).

12. Appareil de cuisine (1) selon l'une des revendications précédentes, **caractérisé en ce que** le moyen antagoniste (6) est formé d'une seule pièce dans un fond de boîtier (7) de l'appareil de cuisine.

13. Appareil de cuisine (1) selon l'une des revendications précédentes, **caractérisé en ce que** le moyen de fermeture (3) se présente sous forme de crochet d'encliquetage élastique, en particulier fabriqué en matière plastiqué.

14. Appareil de cuisine (1) selon l'une des revendications précédentes, **caractérisé en ce que** le tiroir à ustensiles (2) est conçu pour pouvoir être retiré totalement de l'élément de boîtier (7) de l'appareil de cuisine.

15. Appareil de cuisine (1) selon l'une des revendications précédentes, **caractérisé en ce que** l'élément de boîtier (7) est un fond d'appareil de cuisine.
